# FASCICULE DE BREVET EUROPEEN

(11) **EP 0 424 190 B1**
(45) Date de publication et mention de la délivrance du brevet: **09.03.1994**
(21) Numéro de dépôt: 90402569.9
(22) Date de dépôt: 18.09.1990
(51) Int. Cl.: B21J 15/38, B23K 11/31

(54) **Outillage comportant une pince à deux bras articulés, avec système de détalonnage**
Arbeitsgerät mit einer zwei gelenkig gelagerte Arme aufweisenden Zange mit System zum Hintergreifen
Tool outfit comprising a pair of articulated tongs with an undercut system

(30) Priorité: 20.09.1989 FR 8912344
(43) Date de publication de la demande: 24.04.1991
(73) Titulaire: ARO S.A., F-72500 Château-du-Loir (FR)
(72) Inventeur: Boyer, Jean-Noel, F-72500 Luceau (FR)
(74) Mandataire: Picard, Jean-Claude Georges

(56) Documents cités:
- EP-A- 0 122 360
- EP-A- 0 278 185
- WO-A-86/00251

## Description

La présente invention concerne un outillage comportant une pince à deux bras articulés, avec système de détalonnage, ces deux bras portant chacun, à leurs extrémités respectives, un organe d'appui et étant associés mutuellement à des moyens moteurs propres à les faire pivoter l'un par rapport à l'autre, soit pour les refermer et permettre ainsi auxdits organes d'appui d'enserrer des pièces à traiter, soit pour les ouvrir et permettre le dégagement desdites pièces par rapport à la pince après traitement, cet outillage comportant en outre un système de détalonnage permettant d'assurer que les deux dits organes d'appui sont bien écartés desdites pièces après commande de l'ouverture desdits bras.

L'invention concerne généralement les outils ou machines devant réaliser des opérations d'assemblage par soudage, emboutissage, agrafage ou autre, ou bien de manutention, lorsque ces outils ou machines comportent deux bras ou mâchoires destinés à enserrer les pièces à traiter ou à manipuler en appliquant un certain effort pour la réalisation de l'opération d'assemblage ou de manutention en question. Ainsi, l'expression "organes d'appui" peut désigner par exemple des électrodes de soudage par résistance, propres à enserrer deux tôles pour les souder ensemble par passage d'un courant d'intensité élevée, ou encore des outils d'emboutissage, de manutention, etc, et par suite, l'expression générique "traitement" désigne les opérations correspondantes de soudage, emboutissage et autres.

Les deux bras étant mobiles l'un par rapport à l'autre avec un degré de liberté leur permettant de s'adapter automatiquement, par autocentrage, sur lesdites pièces, on comprend qu'il ne suffit pas, en général, de les ouvrir pour permettre le dégagement ou la libération des pièces une fois ledit traitement effectué : encore convient-il de s'assurer que les organes d'appui sont tous les deux suffisamment écartés desdites pièces, avec une position bien définie par rapport à celles-ci. C'est le rôle du système de détalonnage susmentionné.

Il est à noter par ailleurs, à titre de généralités, que cet outillage peut être monté sur des robots ou sur tout autre système de positionnement, les pièces étant fixes par rapport au sol. Dans un autre cas, l'outillage peut être fixe par rapport au sol, les pièces étant alors présentées par un robot ou un manipulateur.

Quant aux moyens moteurs mentionnés au début, ils peuvent comprendre un vérin pneumatique, hydraulique ou hydropneumatique, ou encore un moteur électrique asservi.

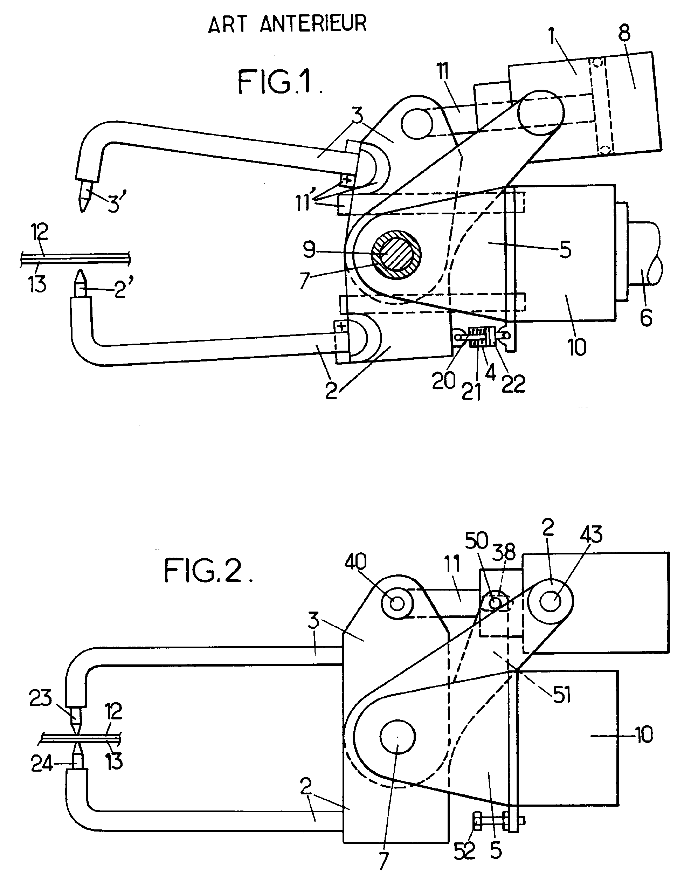

Pour mieux faire comprendre la technique actuelle ainsi que les problèmes que l'invention vise à résoudre, on va décrire ci-dessous à titre d'exemple, avec référence à la figure 1, une pince de soudage par résistance à vérin pneumatique, à bras dits " en X", représentée en position ouverte et pourvue d'un système de détalonnage connu (les principes et problèmes qui vont être évoqués ci-dessous seraient pratiquement les mêmes avec une pince de soudage ou outillage analogue à bras dits "en C").

Cette pince est constituée de bras porte-électrode supérieur 3 et inférieur 2 articulés l'un par rapport à l'autre autour d'un axe 7. Un vérin pneumatique 1 est rattaché d'une part au bras 3 par sa tige 11 et d'autre part au bras 2 par son cylindre. L'admission d'air comprimé dans la chambre 8 de ce vérin permet d'exercer un effort entre les deux bras, dit "effort de soudage". Cet effort s'applique sur les tôles à souder 12 et 13 serrées entre les deux électrodes 3' et 2'. Lorsque l'effort de soudage est atteint, un transformateur 10 permet d'appliquer une tension entre les deux électrodes par l'intermédiaire des conducteurs 11' et des bras porte-électrode 2, 3, servant eux-mêmes de conducteurs. L'ensemble articulé constitué par le vérin 1, les bras inférieur 2 et supérieur 3, peut lui-même osciller autour d'un axe 9 solidaire du berceau de pince 5 ; le berceau de pince est fixé à l'extrémité d'un robot ou d'un bras manipulateur 6.

Pour les pinces utilisées sur les robots ou les manipulateurs, la position relative des tôles à souder par rapport au robot ou manipulateur n'est pas définie avec précision. Cela est dû aux larges tolérances géométriques des préassemblages mécanosoudés, à l'usure des électrodes, aux déviations des trajectoires des robots.

Grâce au montage flottant des bras 2 et 3 par rapport à l'articulation 9, ils peuvent s'autopositionner par rapport aux tôles lors de la fermeture du vérin.

Lorsque la pince est ouverte, le système d'autocentrage décrit ci-dessus n'est pas en mesure d'assurer que l'une des deux électrodes n'est plus en contact avec les tôles à souder pour autoriser le mouvement du robot. En particulier, le couple dû au poids de l'ensemble articulé peut être tel que l'une ou l'autre des électrodes va rester en contact avec les tôles. C'est la raison pour laquelle il faut positionner de manière précise l'un des deux bras (dit "bras détalonnant") par rapport au berceau de la pince 5. Cela est obtenu grâce au système de détalonnage.

On a montré sur la figure 1 un système de détalonnage à vérin pneumatique 4 à simple-effet. Dans ce cas, la pression est admise dans la chambre 20 de ce vérin pendant l'ouverture de la pince, ce qui écarte le bras 2 de la tôle 13 et le ramène dans une position précise par rapport au berceau 5. Pendant la fermeture de la pince, les deux chambres du vérin 4 sont mises à l'air libre, ce qui rend le système autocentrant.

Un ressort 21 peut remplacer l'air comprimé dans la chambre 20 et assurer un effort de détalonnage permanent. Dans ce cas, lors de la fermeture de la pince c'est la réaction du bras supérieur 3 sur la tôle 12 qui ramène le bras 2 en contact avec la tôle 13, comprimant ainsi le ressort 21. L'empilage des tôles aura à supporter cet effort de compression, ainsi que le poids éventuel de l'ensemble articulé.

Il est à noter que le vérin 4 pourrait également être à double-effet. Dans ce cas, la chambre 22 serait alimentée par de l'air comprimé à pression constante ou variable, pour assister le retour du bras 2 en contact avec la tôle 13 pendant la phase de fermeture.

Ce système de détalonnage-équilibrage est très courant : il a l'avantage de provoquer un mouvement positif d'une course définie et avec un effort précis. De plus, dans le cas d'un vérin double-effet, l'équilibrage du poids de l'ensemble mobile est bien assuré.

Les inconvénients des systèmes de détalonnage connus résident toutefois dans la difficulté de réguler le mouvement d'un si petit vérin, qui peut parfois provoquer un choc à l'impact de l'électrode inférieure, l'impossibilité de réguler l'effort de détalonnage et bien entendu la nécessité d'avoir de l'air comprimé et de prévoir un système de distribution par électrovanne. D'autre part, l'évolution de la pince à souder dans l'espace est telle que l'effort nécessaire au rappel du bras détalonnant contre la tôle pendant la phase de fermeture n'est pas constant, car le poids du bras détalonnant peut soit accélérer ce mouvement, soit le freiner, soit être neutre. Le même type d'inconvénient se présente avec la machine à souder décrite dans le document WO 86/00251, dans laquelle le détalonnage est produit par un moteur électrique supplémentaire.

Le but de la présente invention est donc d'obtenir un outillage du type général défini dans le préambule, et dont le système de détalonnage ne présente pas ces inconvénients des systèmes pneumatiques ou à ressorts.

Ce but est également d'obtenir un bien meilleur contrôle du mouvement de détalonnage : un déclenchement précis, une vitesse d'impact limitée et surtout l'asservissement possible de l'effort exercé, soit lors du rapprochement électrode-tôle, soit lors de la séparation électrode-tôle lorsqu'il s'agit de soudage, et plus généralement lors d'un rapprochement ou d'une séparation entre les organes d'appui et les pièces à traiter lorsqu'il s'agit d'autres opérations qu'une opération de soudage.

A cet effet, un outillage du type général défini au début sera, conformément à la présente invention, caractérisé en ce que ledit système de détalonnage comprend un dispositif d'accouplement qui, pour provoquer la course de détalonnage dans les deux sens en utilisant une fraction de la puissance desdits moyens moteurs, comporte un embrayage commandable, notamment du type à commande électrique et apte à engendrer l'effort de détalonnage, cet embrayage pouvant s'accoupler audits moyens moteurs constitués par un moteur électrique asservi apte à engendrer l'effort nécessité par ledit traitement des pièces.

En d'autres termes, l'invention consiste à utiliser le même système moteur pour assurer les fonctions de serrage des pièces et de détalonnage.

Un outillage conforme à l'invention, appliqué à une pince à souder par résistance en X, va maintenant être décrit à titre d'exemple nullement limitatif avec référence aux figures du dessin annexé dans lequel :
- la figure 2 est une vue en élévation de côté de la pince ;
- la figure 3 est une vue en coupe axiale et verticale de son système de détalonnage ; et
- la figure 4 est une vue plus détaillée, en demi-coupe axiale et horizontale de ce système.

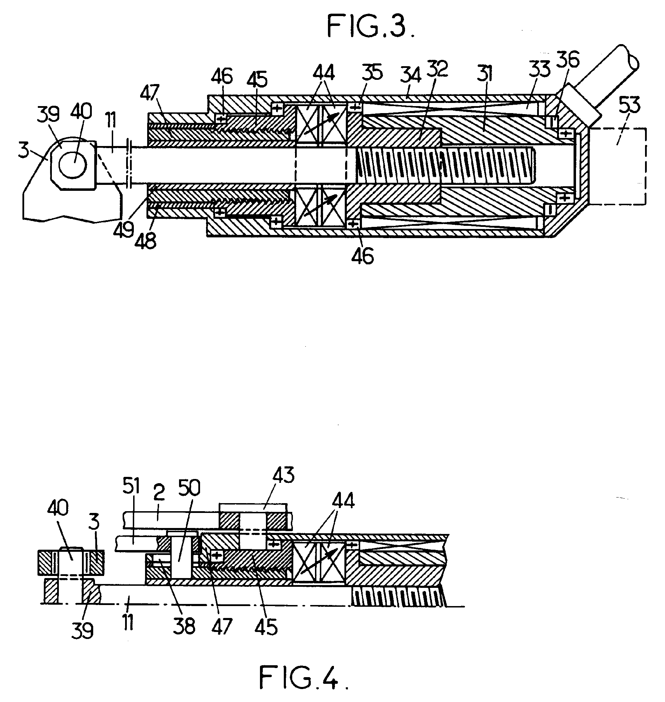

Les moyens moteurs précités comprennent dans cette application un moteur constitué d'un rotor 31 sur lequel est fixé un écrou 32. Le rotor tourne à l'intérieur d'un stator 33 lui-même emprisonné dans une cage rigide 34 constituant le carter de l'ensemble qui comprend le système moteur et le système de détalonnage, cage qui est articulée par rapport à un bras inférieur 2 de la pince de soudage grâce à des tourillons 43 (figure 4) qui assurent également son immobilisation en rotation. Le rotor 31 est supporté axialement et radialement par des roulements 35 et une butée à billes 36 ; il ne peut donc se déplacer axialement par rapport à la cage 34. Un axe 11 à extrémité filetée est vissé dans l'écrou 32 ; son extrémité libre est équipée d'une chape 39 qui permet de l'immobiliser en rotation par rapport au bras supérieur 3 de la pince, grâce à un axe 40.

L'écrou 32 peut être couplé de façon pneumatique, mécanique, hydraulique ou électrique à un autre écrou 45 grâce à un embrayage constitué d'un coupleur 44, cela de manière permanente ou temporaire.

Le coupleur 44 doit accepter un glissement en cas de blocage en rotation de l'écrou 45, et le couple de glissement peut être constant ou réglable, suivant les applications.

L'écrou 45 est supporté axialement et radialement par rapport à la cage 34 par des roulements à billes 46. A l'intérieur de cet écrou est engagée une vis creuse 47, maintenue radialement par rapport à la cage 34 par un coussinet extérieur 48, un coussinet intérieur 49 permettant la translation de la tige 11. La vis 47 ne peut se mouvoir ni en translation, grâce à des tourillons 50 qui la relient à une chape 51 fixe par rapport au berceau 5 de la pince (figure 2), ni en rotation grâce aux mêmes tourillons 50 qui passent à travers une lumière 38 allongée pratiquée dans la cage 34 (voir figure 4).

Sur la figure 3, le moteur est représenté en position tige 11 et vis 47 complètement rentrées, ce qui correspond à la pince ouverte et détalonnée.

Lorsque le moteur tourne dans un sens donné, l'écrou 32, bloqué en translation, repousse la tige 11 vers l'extérieur, ce qui provoque la fermeture de la pince.

Si l'embrayage ou coupleur 44 est embrayé, l'écrou 32 entraîne en rotation l'écrou 45, en prise avec la vis creuse 47. L'écrou 45 ne pouvant se mouvoir en translation, il tend à provoquer le déplacement longitudinal de la vis 47, qui ne peut tourner grâce aux tourillons 50 en prise avec la cage 34. Or, la vis 47 est également immobilisée en translation car elle est solidaire du berceau 5 de pince par les tourillons 50 et la chape 51. Par réaction, c'est l'ensemble moteur qui recule, provoquant la rotation vers l'arrière de la chape 2 autour de l'axe 7, donc la fermeture du bras détalonnant 2.

Lorsque l'organe d'appui correspondant, en l'occurrence une électrode 24, arrive en contact avec la tôle 13, il se produit un glissement au niveau du coupleur. Le rotor 31 ainsi que l'écrou 32 continuent à tourner jusqu'à ce que l'autre organe d'appui, à savoir l'électrode supérieure 23, arrive à son tour en contact avec la tôle 12. A ce moment, le moteur applique un couple constant qui permet d'obtenir le serrage des tôles entre les deux électrodes.

Pour l'ouverture, le moteur est commandé en rotation dans l'autre sens, et l'écrou 32 solidaire du rotor 31 provoque la translation de la vis 11 vers l'intérieur du moteur. Cette vis, attachée au bras mobile 3 par la chape 39 de l'axe 40, rappelle le bras supérieur 3 à l'ouverture. Dans le même temps, si le coupleur 44 est embrayé, l'écrou 45 est entraîné en rotation et tend à provoquer la translation vers l'intérieur de la vis 47. Cette vis étant liée à la chape 51 par les tourillons 50 ne peut se mouvoir, et par réaction, c'est donc le moteur qui se déplace vers l'avant grâce à la lumière 38, provoquant la rotation du bras détalonnant 2 dans le sens de l'ouverture.

Lorsque le bras détalonnant arrive sur une butée 52 (figure 2), son mouvement est interrompu, le coupleur 44 passe en glissement, et le rotor 31 et l'écrou 32 continuent de tourner jusqu'à ce que le bras supérieur 3 arrive en butée mécanique arrière ou à une position préprogrammée si le moteur est asservi en position.

Il est à noter que le principe de l'invention reste valable si l'embrayage 44, au lieu d'être à commande électrique, est à commande pneumatique, hydraulique ou mécanique. Dans ce cas, la commande de déclenchement de l'embrayage et, éventuellement, de modulation de son couple, pourront également être pneumatiques, hydrauliques ou mécaniques.

Une autre possibilité de l'invention concernant les cas où elle utilise l'énergie du moteur principal d'effort de soudage pour effectuer le détalonnage, consiste à remplacer l'embrayage par un coupleur permanent. Ce coupleur pourrait être à friction mécanique, hydraulique, magnétique ou par courants de Foucault par exemple, mais tout autre système de couplage permanent peut être envisagé.

Dans ce cas, le fonctionnement serait identique au fonctionnement avec un embrayage commandé, mais ne permettrait ni le déclenchement à un endroit précis du cycle ni a modulation de l'effort, l'avantage essentiel de ce système étant son faible coût d'exécution et, dans certains cas, le freinage permanent sans dissipation d'énergie à l'arrêt.

En ce qui concerne les autres systèmes de détalonnage à embrayage commandé électriquement précédemment décrits dans la présente demande de brevet, il faudra selon les cas pouvoir assumer une ou les deux fonctions suivantes :
- autocentrage ;
- blocage du bras en position détalonnée.

L'autocentrage pourra être obtenu par la réversibilité du système vis et écrou 45/47 du système de détalonnage.

Le blocage du bras détalonnant en position ouverte ne pose un problème que lorsque le moteur d'effort de soudage est arrêté, par exemple lorsque la pince est ouverte complètement. Dans ce cas, soit l'embrayage peut fournir un couple de maintien statique permanent, soit il faut compter sur l'irréversibilité du système vis-écrou de détalonnage.

De même, on peut vouloir, pour des raisons de sécurité, éviter un mouvement des bras de la pince lorsque le courant électrique ou l'énergie hydraulique ou pneumatique dans le cas d'embrayage de ce type, sont interrompus. La solution peut être recherchée à nouveau dans l'irréversibilité du système vis-écrou du système de détalonnage ; ou bien si cette irréversibilité pose un problème, il faut prévoir d'associer à l'embrayage un système de freinage statique fonctionnant même en l'absence d'énergie.

Tout ce qui vient d'être décrit concerne un système de détalonnage utilisant l'énergie du moteur d'effort de soudage, mais cela s'applique également à des pinces à vérin pneumatique ou à moteur électrique dans lesquelles le détalonnage se ferait selon la description de l'invention, mais à l'aide d'un moteur auxiliaire spécial de détalonnage.

## Revendications

1. Outillage comportant une pince à deux bras articulés (2, 3), avec système de détalonnage, ces deux bras portant chacun, à leurs extrémités respectives, un organe d'appui (23, 24) et étant associés mutuellement à des moyens moteurs (31,33) propres à les faire pivoter l'un par rapport à l'autre, soit pour les refermer et permettre ainsi auxdits organes d'appui (23, 24) d'enserrer des pièces à traiter (12, 13), soit pour les ouvrir et permettre le dégagement desdites pièces par rapport à la pince après traitement, cet outillage comportant en outre un système de détalonnage permettant d'assurer que les deux dits organes d'appui (23, 24) sont bien écartés desdites pièces (12, 13) après commande de l'ouverture desdits bras, caractérisé en ce que ledit système de détalonnage comprend un dispositif d'accouplement qui, pour provoquer la course de détalonnage dans les deux sens en utilisant une fraction de la puissance desdits moyens moteurs, comporte un embrayage commandable (44), notamment du type à commande électrique et apte à engendrer l'effort de détalonnage, cet embrayage (44) pouvant s'accoupler auxdits moyens moteurs, constitués par un moteur électrique asservi (31, 33) apte à engendrer l'effort nécessité par ledit traitement des pièces.

2. Outillage selon la revendication 1, caractérisé en ce que l'embrayage (44) est de type à couple modulable, permettant de régler l'effort d'approche ou l'effort de retrait du bras détalonné en fonction de signaux électriques.

3. Outillage selon la revendication 1, caractérisé en ce que ledit dispositif d'accouplement comporte un coupleur permanent.

4. Outillage selon la revendication 1, caractérisé par un maintien de la position détalonnée sans apport d'énergie grâce à un entraînement vis et écrou (11, 32) de détalonnage irréversible.

5. Outillage selon la revendication 1, caractérisé par un maintien de la position détalonnée sans apport d'énergie grâce à un frein statique actionné lorsque l'énergie est interrompue.

## Claims

1. Tooling comprising tongs with two pivoted arms (2, 3), with a release system, said two arms each bearing, at their respective ends, a pressure member (23, 24) and being associated mutually with drive means (31, 33) adapted to cause them to pivot with respect to one another, either to close them and thus permit said pressure members (23, 24) to grip the parts (12, 13) to be treated, or to open them and permit the disengagement of said parts with respect to the tongs after treatment, said tooling comprising in addition a release system enabling it to be ensured that the two said pressure members (23, 24) are well separated from said parts (12, 13) after actuating the opening of said arms, wherein said release system comprises a coupling device which, in order to cause the release travel in both directions by using a fraction of the power of said drive means, comprises a controllable clutch (44), particularly of the electrically controlled type, and adapted to generate the release force, and that this clutch (44) is couplable with drive means constituted by a slaved electric motor (31, 33) adapted to generate the force required by said treatment of the parts.

2. Tooling according to claim 1, wherein the characteristics of the clutch (44) enable its torque to be modulated and hence the force of approach or the force of withdrawal of the released arm as a function of electrical signals.

3. Tooling according to claim 1, wherein said coupling device is constituted by a permanent coupler.

4. Tooling according to claim 1, comprising maintenance of the releasing position without addition of energy due to an irreversible screw and nut (11, 32) release drive.

5. Tooling according to claim 1, comprising maintenance of the release position without addition of energy due to a static brake actuated when the energy is interrupted.

## Patentansprüche

1. Arbeitsgerät mit einer zwei gelenkig gelagerte Arme aufweisenden Zange (2,3) mit einem System zum Hintergreifen, wobei die beiden Arme jeweils an ihren jeweiligen Enden ein Stützelement (23,24) tragen und gegenseitig mit Motormitteln (31,33) verbunden sind, welche geeignet sind, diese gegeneinander zu schwenken, sowohl um diese zu schließen und so den Stützorganen (23,24) Bearbeitungsstücke (12,13) zu umschließen erlauben, als auch um diese zu öffnen und die Freigabe dieser Stücke gegenüber der Zange nach der Bearbeitung zu erlauben, wobei das Arbeitsgerät außerdem ein System zum Hintergreifen aufweist, welches es erlaubt, sicherzustellen, daß die zwei Stützelemente (23,24) gut von den Bearbeitungsstücken (12,13) nach dem Öffnungssignal der Arme weggespreizt werden,
dadurch gekennzeichnet,
daß das System zum Hintergreifen eine Kupplungsvorrichtung aufweist, die durch Gebrauch eines Teils der Leistung der Motormittel den Lauf des Hintergreifens in beiden Richtungen hervorruft und eine steuerbare Kupplung (44) aufweist, insbesondere mit elektrischer Steuerung und geeignet zur Erzeugung der Kraft des Hintergreifens, wobei die Kupplung (44) an die Motormittel ankuppelbar ist, welche von einem gesteuerten Elektromotor (31,33) gebildet ist, der geeignet ist, die erforderliche Kraft zur Behandlung der Bearbeitungsstücke zu erzeugen.

2. Arbeitsgerät nach Anspruch 1,
dadurch gekennzeichnet,
daß die Kupplung (44) mit einem modulierbaren Moment ausgebildet ist und erlaubt, die Kraft des Zusammenziehens oder die Kraft des Öffnens des hintergriffenen Armes in Abhängigkeit von den elektrischen Signalen zu regeln.

3. Arbeitsgerät nach Anspruch 1,
dadurch gekennzeichnet,
daß die Kupplungsvorrichtung einen Permanentkuppler aufweist.

4. Arbeitsgerät nach Anspruch 1,
gekennzeichnet durch
ein Aufrechterhalten der hintergriffenen Position ohne Energiezuführung aufgrund einer Antriebsschraube und einer Mutter (11,32) zum irreversiblen Hintergreifen.

5. Arbeitsgerät nach Anspruch 1,
gekennzeichnet durch
ein Aufrechterhalten der hintergriffenen Position ohne Energiezuführung aufgrund einer statischen Bremse, welche betätigt wird, wenn die Energiezuführung unterbrochen ist.
